# EUROPÄISCHE PATENTSCHRIFT

(11) **EP 1 126 956 B1**
(45) Veröffentlichungstag und Bekanntmachung des Hinweises auf die Patenterteilung: **18.09.2002**
(21) Anmeldenummer: 99971756.4
(22) Anmeldetag: 03.11.1999
(51) Int. Cl.: B26B 19/28, H02K 33/06

(54) **ANTRIEBSEINHEIT FÜR EINE HAARSCHNEIDEMASCHINE**
DRIVE UNIT FOR HAIR CLIPPERS
UNITE D'ENTRAINEMENT POUR TONDEUSE A CHEVEUX

(30) Priorität: 05.11.1998 DE 19850966
(43) Veröffentlichungstag der Anmeldung: 29.08.2001
(73) Patentinhaber: WAHL GmbH, 78089 Unterkirnach (DE)
(72) Erfinder: KIENZLER, Gerhard, D-78089 Triberg (DE); POHL, Gerhard, D-78112 St. Georgen (DE); PFEIFLE, Artur, D-78089 Unterkirnach (DE)
(74) Vertreter: Neunert, Peter Andreas
(86) Internationale Anmeldenummer: EP9908432
(87) Internationale Veröffentlichungsnummer: WO00027599

(56) Entgegenhaltungen:
- EP-A- 0 802 614
- DE-B- 1 282 155
- FR-A- 2 268 386
- US-A- 3 643 117

## Beschreibung

Die Erfindung betrifft eine Antriebseinheit für eine Haarschneidemaschine gemäß Oberbegriff des Anspruchs 1.

Derartige Antriebseinheiten sind grundsätzlich bekannt. Diese besitzen einen elektrischen Antriebsmotor, der aus einem Feldmagneten mit einer Spule und einen die Spule durchsetzenden Kern, sowie aus einem Anker besteht. Durch die Erregung des Feldmagneten wird der Anker in Schwingung versetzt und kann damit über einen an einem Ende davon angeordneten Mitnehmer einen Schneidsatz der Haarschneidemaschine in Bewegung versetzen.

Üblicherweise ist bei den bekannten Antriebseinheiten der Anker im wesentlichen parallel zu der aus dem Feldmagneten und der Spule bestehenden Einheit angeordnet, so daß (in einer Ansicht von oben) der dazwischen vorhandene Luftspalt geradlinig verläuft.

Nachteilig ist bei dieser Konstruktion, daß kein optimaler Magnetfluß erzeugt werden kann.

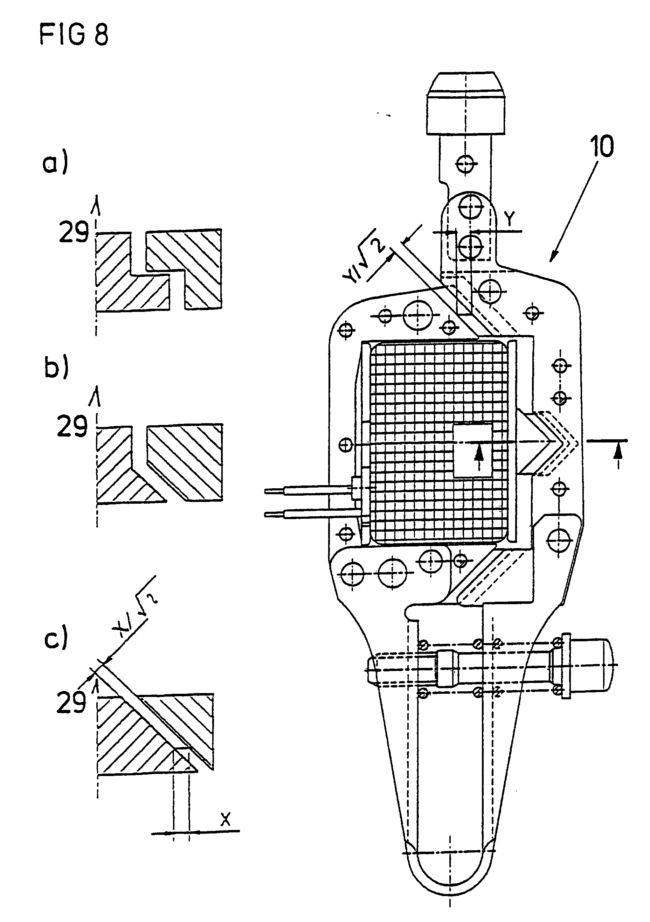

Die EP 0 802 614 A1 schlägt deshalb vor, den Luftspaltverlauf dadurch zu optimieren, dass der Feldmagnet und der Anker in den die Luftspaltabschnitte bildenden Bereichen stufenförmig versetzt gestaltet sind. Dies betrifft einerseits den zentralen, mittleren Bereich des Ankers, der mit einem Rücksprung versehen ist, in den ein korrespondierend gestalteter Vorsprung des Kerns berührungslos eingreift. Andererseits sind auch die seitlich an der Peripherie der Spule liegenden Luftspaltabschnitte stufenförmig gestaltet, so daß auch hier ein Ineinandergreifen von Feldmagnet und Anker erreicht wird. Eine Ausführungsvariante (Fig. 8) zeigt seitliche Luftspaltabschnitte, von denen einer eine geradlinig, schräg geneigt verlaufende Form aufweist, wohingegen der andere seitliche Luftspaltabschnitt eine Dreiecksform mit seitlichem Versatz zeigt.

Zwar gelingt mit derartigen Luftspaltgeometrien eine Erhöhung des Wirkungsgrades, da der Magnetfluß verbessert werden kann. Nachteilig hierbei ist jedoch, daß die Relativzuordnung von Feldmagnet und Anker äußerst exakt erfolgen muß, um den Magnetfluß optimal zu erhalten. Bereits relativ geringfügige seitliche Abweichungen, die in der Praxis unvermeidlich auftreten, führen zu einem sehr starken Abfall der erzeugbaren Kräfte, so daß die theoretischen Auslegungswerte kaum erreichbar sind. Der erforderliche Aufwand in der Fertigung ist erheblich, da der Feldmagnet und der Anker hochpräzise im Gehäuse der Haarschneidemaschine positioniert werden müssen.

Sinngemäß tritt das selbe Problem bei dem aus der DE-AS 1 282 155 bekannten Schwingankermotor auf, bei dem eine treppenförmige Luftspaltgeometrie mit einer Vielzahl von Stufen gebildet ist.

Der Erfindung lag daher das Problem zugrunde, eine Antriebseinheit für eine Haarschneidemaschine der eingangs genannten Art derart zu verbessern, daß sie die geschilderten Nachteile nicht mehr aufweist. Insbesondere sollte die Antriebseinheit verbessert werden, um zum einen den konstruktiven Aufbau und somit den fertigungsbedingten Aufwand zu vereinfachen und zum anderen einen möglichst optimalen Magnetfluß zu verwirklichen.

Dieses Problem wird mit einer Antriebseinheit für eine Haarschneidemaschine gelöst, die die Merkmale des Anspruchs 1 aufweist. Vorteilhafte Ausführungsformen sind durch die Merkmale der Unteransprüche gegeben.

Die Erfindung basiert auf der Idee, sowohl die mittleren als auch die seitlichen Luftspaltabschnitte in Bezug auf die Längsachse jeweils angenähert symmetrisch und schräg geneigt verlaufend auszubilden. Die symmetrische Anordnung sorgt dafür, dass die erzeugbaren Kräfte unabhängig von einem eventuelen seitlichen Versatz konstant bleiben. Damit sind diese Kräfte weitgehend unabhängig von Längentoleranzen bzw. von Abweichungen bei der Montage.

Der gegenüber der Längsachse schräg geneigte Verlauf der Luftspalte bewirkt, daß der magnetische Weg geringer ist als der mechanische Abstand.

Dies führt zu folgenden Vorteilen bzw. Variationsmöglichkeiten:
- optimierte Antriebsleistung bei gegebener Geometrie und elektrischer Leistung, oder
- geringerer Aufwand (weniger Wicklungen) für die Kupferspule bei ursprünglicher Leistung, oder
- zu größeren Fertigungstoleranzen bei ursprünglicher Leistung, oder
- zu höherer Leistung bei ursprünglicher Auslegung.

Die Ursache ist darin zu sehen, daß bei sonst gleicher Geometrie ein erhöhter Wirkungsgrad erzielt wird.

Von besonderem Vorteil ist es, wenn die Neigung des Luftspaltverlaufs in Bezug auf die Längsachse in etwa 45° beträgt, da dadurch der magnetische Weg um den Faktor 1/√2 geringer ist als der mechanische Abstand, wodurch die Effizienz wesentlich gesteigert wird.

Fertigungstechnisch besonders einfach lassen sich optimale Luftspaltabschnitte im mittleren Bereich dadurch bilden, daß der Anker im Bereich der Längsachse eine dreiecksförmige Ausklinkung aufweist, in die ein korrespondierend gestalteter Mittelsteg des Kerns berührungslos hineinragt.

Es sind nicht nur geradlinige Luftspaltverläufe denkbar sondern auch solche mit gekrümmtem Konturverlauf.

Unter fertigungstechnischen Aspekten ist es an sich optimal, wenn im Längsschnitt betrachtet die Luftspaltabschnitte geradlinig verlaufend ausgebildet sind. Die Formgebung der häufig durch Blechpakete aufgebauten Feldmagnete und Anker kann durch einen einfachen Stanzvorgang erreicht werden. Unter dem Aspekt einer Wirkungsoptimierung ist es jedoch von Vorteil, den Querschnittsverlauf auch im Längsschnitt, d.h. in Höhenrichtung, schräg oder aber auch versetzt verlaufend zu gestalten. Fertigungstechnische Mittel sind hierfür verfügbar, wenngleich ein höherer Aufwand gegenüber den in Höhenrichtung geradlinig verlaufenden Luftspaltabschnitten gegeben ist.

Als optimal im Sinne einer Magnetflußoptimierung ist es, wenn die Luftspaltabschnitte auch in Höhenrichtung einen Winkel von etwa 45° einnehmen.

Die Antriebseinheit kann besonders vorteilhaft als ein einziges Modul ausgebildet werden, wenn der Anker an dem dem Mitnehmer entgegengesetzten Ende mit dem Feldmagneten verbunden ist. Dies kann beispielsweise über Bügel, Platten oder Bolzen-Anordnungen geschehen.

Zur Unterstützung der Schwingung des Ankers ist zwischen diesem und dem Feldmagneten mindestens eine Druckfeder angeordnet.

Gemäß einer weiteren vorteilhaften Ausführungsform ist es möglich, die Resonanzfrequenz des Antriebes durch Veränderung des Federwegs der Druckfeder über eine Einstellschraube oder über eine die Schenkel des Bügels verrastbar ergreifende Klammer einzustellen.

Die Erfindung wird nachstehend anhand der in den Figuren dargestellten Ausführungsbeispielen näher erläutert. Es zeigen:
- Figur 1: eine Draufsicht auf eine erste Ausführungsform, wobei die aus dem Feldmagneten und aus der Spule bestehende Einheit separat-zu dem Anker ausgebildet ist;
- Figur 2: eine Draufsicht auf eine zweite Ausführungsform, wobei die Feldmagnet-Spulen-Einheit über einen ersten Bügel mit dem Anker verbunden ist;
- Figur 3: eine Draufsicht auf eine dritte Ausführungsform, wobei die Feldmagnet-Spulen-Einheit mit dem Anker über eine erste Platte verbunden ist;
- Figur 4: eine Draufsicht auf eine vierte Ausführungsform, wobei die Feldmagnet-Spulen-Einheit über eine zweite Platte mit dem Anker verbunden ist;
- Figur 5: eine Draufsicht auf eine fünfte Ausführungsform, wobei der Anker parallel zu der Feldmagnet-Spulen-Einheit schwingt;
- Figur 6: eine Draufsicht auf eine sechste Ausführungsform, wobei die Feldmagnet-Spulen-Einheit über einen zweiten Bügel mit dem Anker verbunden ist;
- Figur 7: eine Draufsicht auf eine siebte Ausführungsform, wobei die Feldmagnet-Spulen-Einheit über einen dritten Bügel mit dem Anker verbunden ist; und
- Figur 8: eine Draufsicht auf eine achte Ausführungsform, wobei der Luftspaltverlauf modifiziert ist.

In der nachstehenden, detaillierten Figurenbeschreibung sind jeweils übereinstimmende Teile mit derselben Bezugsziffer versehen.

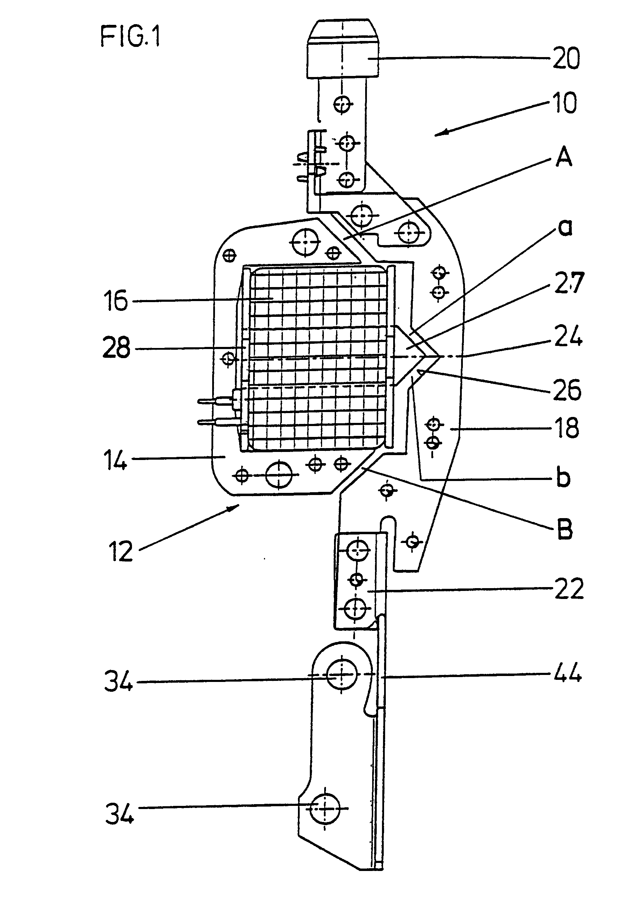

Der grundsätzliche Aufbau einer Antriebseinheit 10 für eine Haarschneidemaschine ergibt sich aus der Figur 1. Die Antriebseinheit 10 besteht aus einem elektrischen Antriebsmotor 12, der einen in Draufsicht hufeisenförmigen Feldmagneten 14 mit einem Kern 28 aufweist, innerhalb dessen eine Spule 16 angeordnet ist.

Bei den Schenkelenden des Feldmagneten 14 ist ein Anker 18 angeordnet, der in diesem Fall als separates Teil bzw. Modul ausgebildet ist. Auch der Antriebsmotor 12 ist in diesem Fall als ein Modul ausgebildet, so daß beide Module einfach ausgewechselt werden können.

Um einen möglichst optimalen Magnetfluß erzeugen zu können, ist eine spezielle Geometrie des Luftspaltverlaufs zwischen dem Feldmagneten 14 und dem Anker 18 vorgegeben. Dabei sind Luftspaltabschnitte a, b zwischen dem Feldmagneten 14 im Bereich des Kerns 28 und dem Anker 18, angrenzend an einer Längsachse 24 der Spule 16, im wesentlichen zur Längsachse 24 schräg geneigt ausgebildet. Dies wird zum einen durch eine im Anker 18 im Bereich der Längsachse 24 angeordnete dreiecksförmige Ausklinkung 26 sichergestellt, in die ein entsprechend ausgebildeter Mittelsteg 27 des Kerns 28 berührungslos hineinragt.

Zum andern setzt sich diese Neigung des Luftspaltverlaufes im Bereich der Ausklinkung 26 seitlich der Spule 16 zwischen den entsprechenden Enden des Feldmagneten 14 und des Ankers 18 fort. Dort sind Luftspaltabschnitte A, B gebildet.

Die Neigung der Luftspaltabschnitte A, a, b, B, d. h. der Winkel in Bezug auf die Längsachse 24, beträgt in etwa 45°, da dadurch der magnetische Weg um den Faktor 1/√2 geringer ist als der mechanische Abstand. Dadurch können u. a. die Fertigungstoleranzen vorteilhaft unterstützt werden, da diese nicht mehr den hohen Anforderungen bekannter Antriebseinheiten genügen müssen. Darüber hinaus sind die mittleren Luftspaltabschnitte a, b und die seitlichen Luftspaltabschnitte A, B in bezug auf die Längsachse 24 jeweils angenähert symmetrisch angeordnet. Verschiebungen quer zur Längsachse 24, wie sie fertigung- und montagebedingt auftreten können, führen zu keinen Abweichungen hinsichtlich der erzeugten Kräfte.

Dieser anhand der Figur 1 geschilderte grundsätzliche Aufbau bzw. Verlauf des Luftspaltes ist für alle Ausführungsbeispiele gleich.

Wie bereits oben beschrieben, weist das Ausführungsbeispiel gemäß Figur 1 zwei Module auf, wobei der Anker 18 an einem Ende einen Mitnehmer 20 enthält, der einen Schneidsatz einer Haarschneidemaschine in Bewegung versetzen kann. An dem dem Mitnehmer 20 entgegengesetzen Ende des Ankers 18 ist eine Lagerung 22 befestigt, die mit einer Schwingfeder 44 verbunden ist. Diese Schwingfeder 44 wird von zwei gehäuseseitigen Bolzen 34 gehalten.

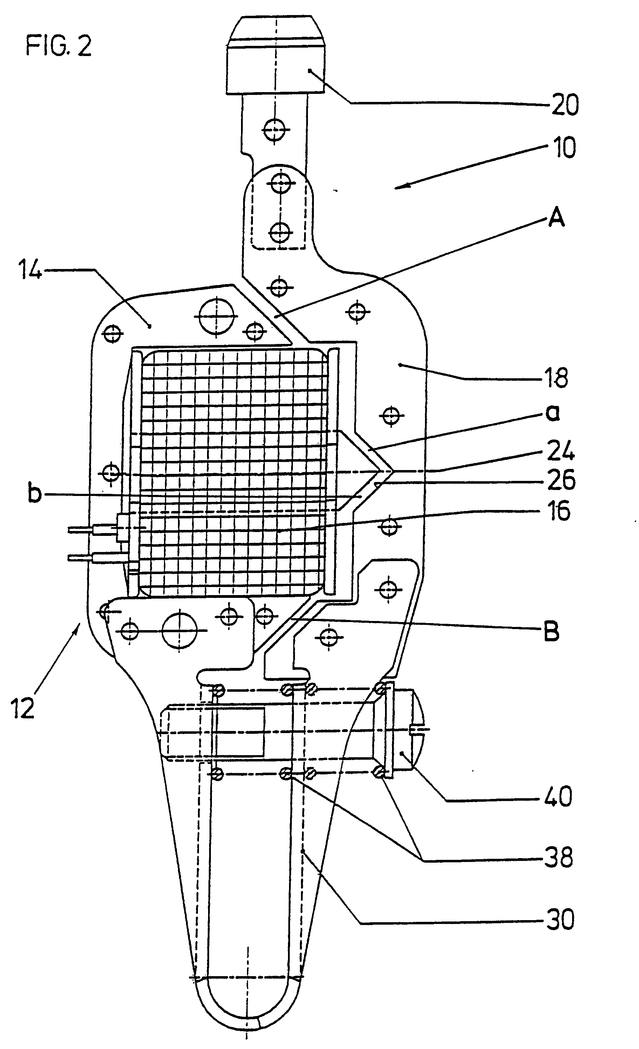

Neben dem bereits beschriebenen Luftspaltverlauf ist den Ausführungsbeispielen gemäß den Figuren 2 bis 8 gemeinsam, daß die darin gezeigten Antriebseinheiten 10 als ein einziges Modul ausgebildet sind.

Dies wird bei allen Ausführungsbeispielen gemäß den Figuren 2 bis 8 durch eine Verbindung sichergestellt, die an dem dem Mitnehmer 20 entgegengesetzten Ende des Ankers 18 angeordnet ist und den Feldmagneten 14 mit dem Anker 18 verbindet. Bei dem in Figur 2 gezeigten Ausführungsbeispiel besteht die Verbindung aus einem Bügel 30, der U-förmig ausgebildet ist.

Angrenzend an die Schenkelenden des U-förmig ausgebildeten Bügels 30 ist eine Druckfeder 38 angeordnet, deren Federweg über eine Einstellschraube 40 verändert werden kann, um die Resonanzfrequenz einstellen zu können.

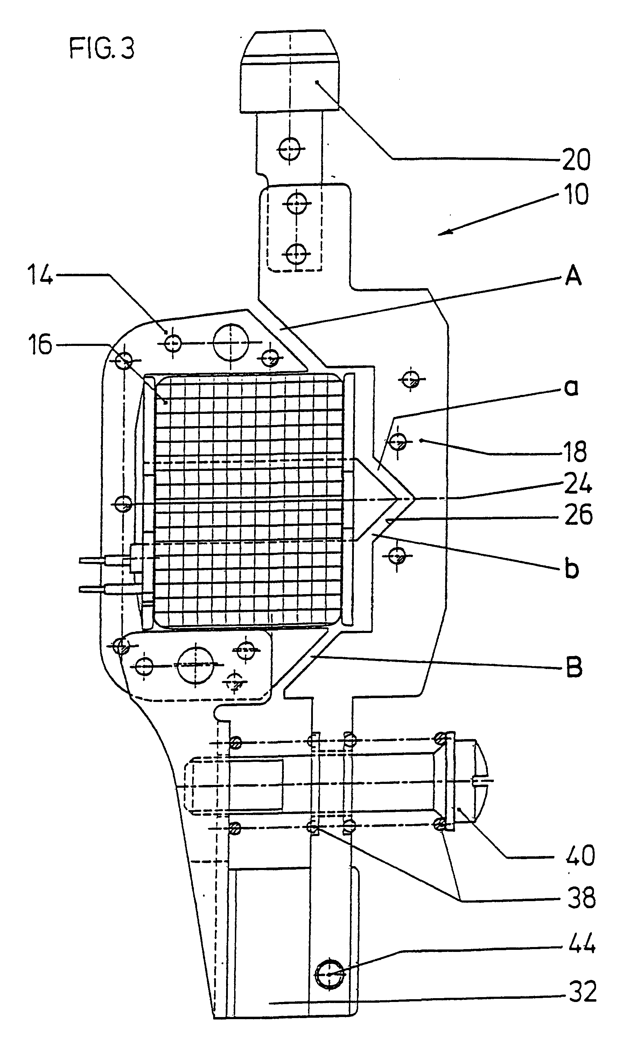

Das in Figur 3 gezeigte dritte Ausführungsbeispiel unterscheidet sich von dem Ausführungsbeispiel gemäß Figur 2 dadurch, daß der Feldmagnet 14 mit dem Anker 18 über eine erste Platte 32 verbunden ist, wobei der Anker 18 an einem an der Platte 32 befestigten Zapfen 44 schwenkbar gelagert ist.

Des weiteren weist das dritte Ausführungsbeispiel ebenfalls die Druckfeder 38 auf, deren Federweg zur Einstellung der Resonanzfrequenz über die Einstellschraube 40 veränderbar ist.

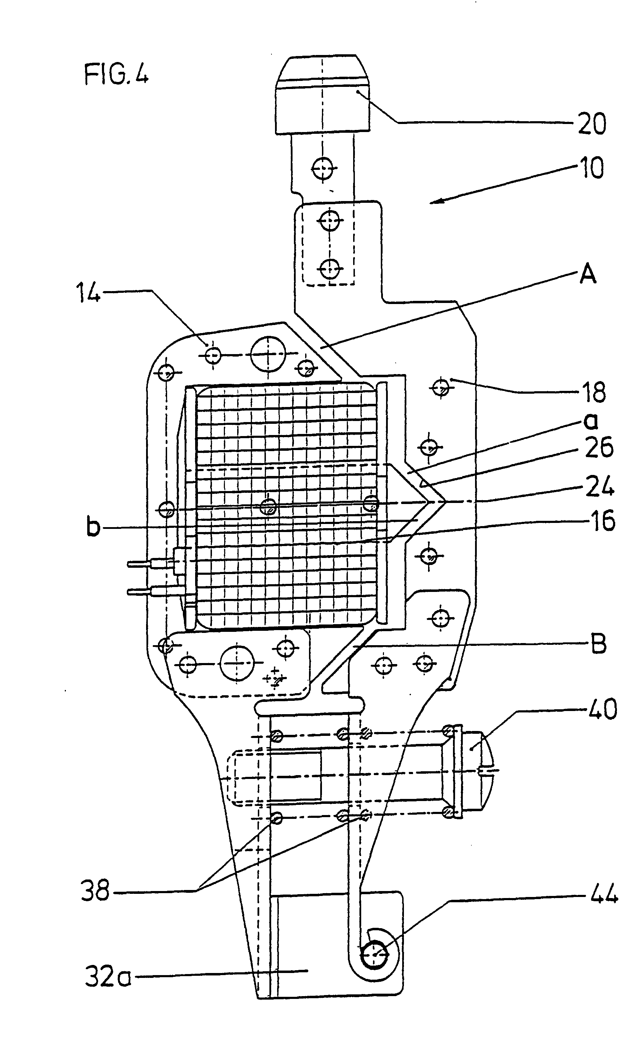

Das in der Figur 4 gezeigte vierte Ausführungsbeispiel weist als Verbindung zwischen Feldmagneten 14 und Anker 18 eine zweite Platte 32a auf, die ebenfalls einen Zapfen 44 enthält. Im Unterschied zu dem in Figur 3 gezeigten dritten Ausführungsbeispiel umgreift das dem Mitnehmer 20 entgegengesetzten Ende des Ankers 18 diesen Zapfen 44 nicht vollständig, da dieses Ende als eine nicht vollständig geschlossene Hülse ausgebildet ist.

Die Anordnung der Druckfeder 38 mit Einstellschraube 40 ist ähnlich zu dem Ausführungsbeispiel gemäß Figur 3.

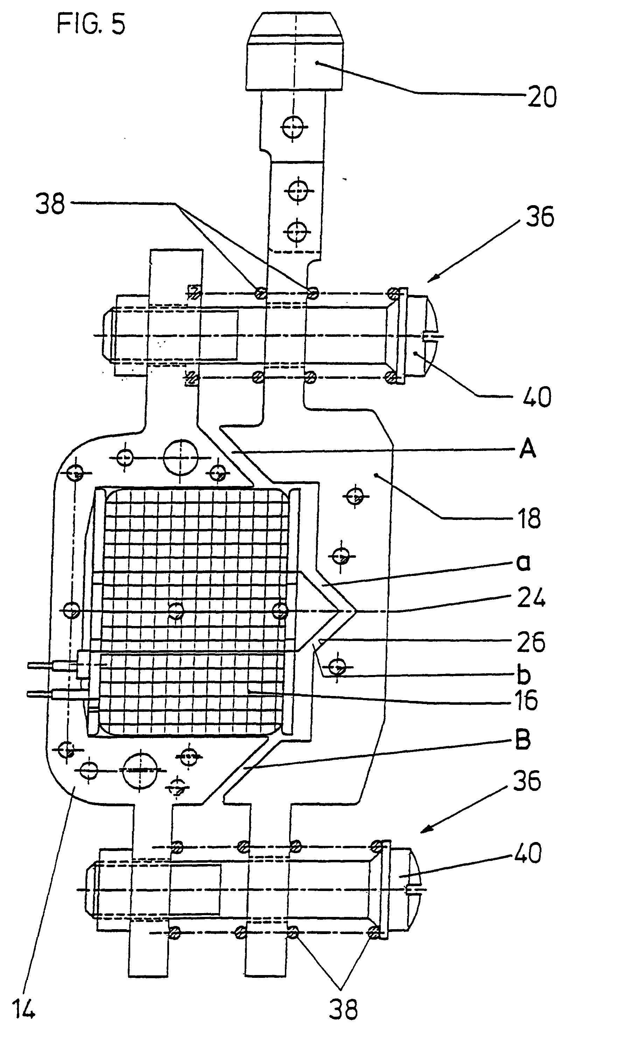

In der Figur 5 ist ein fünftes Ausführungsbeispiel gezeigt, das eine Parallelschwingung zwischen Anker 18 und Feldmagneten 14 ermöglicht.

Dies wird dadurch erreicht, daß die aus dem Feldmagneten 14 und der Spule 16 bestehende Einheit mit dem Anker 18 über zwei Bolzenanordnungen 36 miteinander verbunden sind.

Diese Bolzenanordnungen 36 bestehen aus den bereits bekannten Druckfedern 38 mit Einstellschrauben 40, die in diesem Fall an den jeweiligen Enden des Feldmagneten 14 und des Ankers 18 angeordnet sind.

Dies führt zu einer günstigeren Zuordnung von dem Feldmagneten 14 zu dem Anker 18 sowie zu einem stabileren Schwingverhalten.

Aufgrund des Parallelantriebes beschreibt ein über den Mitnehmer 20 bewegbares Schermesser keinen Kreisbogen mehr, so daß auch keine Winkel mehr erforderlich sind.

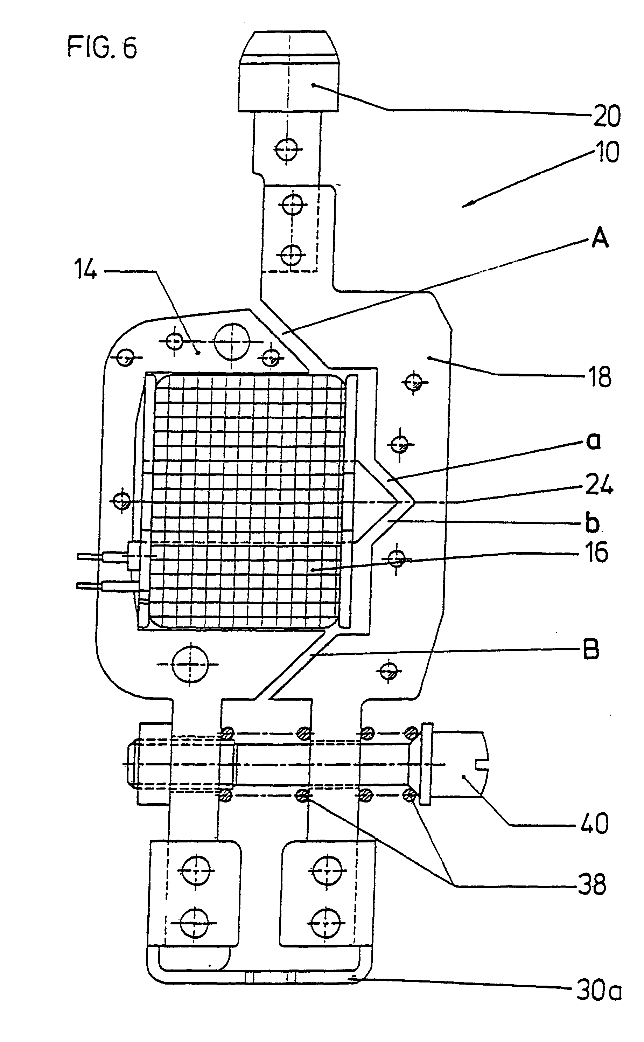

Bei dem in Figur 6 gezeigten sechsten Ausführungsbeispiel sind der Feldmagnet 14 und der Anker 18 über einen zweiten Bügel 30a miteinander verbunden.

In dem Bereich zwischen dem Bügel 30a und dem an der Spule 16 angrenzenden Schenkel des Feldmagneten 14 ist auch hier wiederum die Druckfeder 38 mit der entsprechenden Einstellschraube 40 befestigt.

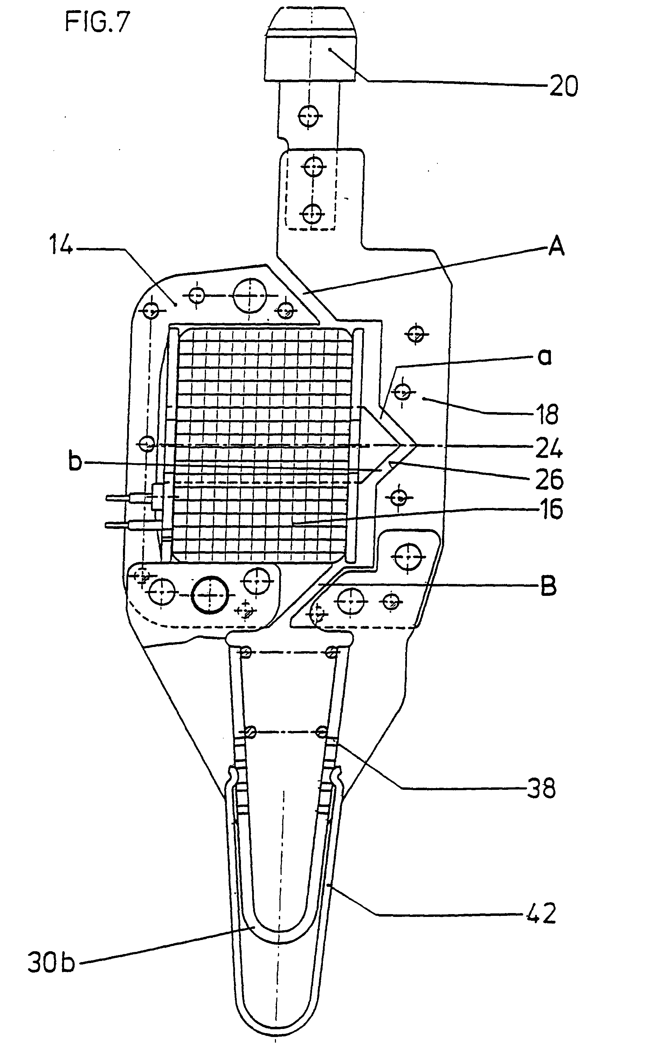

Die Figur 7 zeigt ein der Variante gemäß Figur 2 ähnliches siebtes Ausführungsbeispiel, da auch hier der Feldmagnet 14 mit dem Anker 18 über einen dritten Bügel 30b verbunden ist.

An den Schenkelenden des annähernd U-förmig ausgebildeten Bügels 30b ist auch hier eine Druckfeder 38 angeordnet.

Bei diesem siebten Ausführungsbeispiel kann die Resonanzfrequenz dadurch eingestellt werden, daß eine verrastbare Klammer 42 auf den Bügel 30b von seinem gekrümmten Ende her aufgesteckt ist. Dabei führen unterschiedliche Einstecktiefen der Klammer 42 zu unterschiedlichen Abständen der Schenkel des Bügels 30b, wodurch der Federweg der Druckfeder 38 beeinflußt werden kann.

Alle Ausführungsbeispiele bilden einfach einbaufähige Einheiten und weisen, mit Ausnahme des ersten Ausführungsbeispiels gemäß Figur 1, gehäuseunabhängige Druckfedern auf. Alle Ausführungsbeispiele weisen ein stabileres Schwingverhalten auf und haben aufgrund des Luftspaltverlaufes einen annähernd optimalen Magnetfluß.

Die Variante gemäß Figur 8 weist noch eine weitere Besonderheit auf. Die Grundkonstruktion stimmt mit derjenigen gemäß Figur 2 überein, wobei jedoch eine weitere Optimierung des Luftspaltverlaufs vorgenommen wurde. Die Luftspaltabschnitte A, a, b, B verlaufen in Längsrichtung 21 gemäß Schnittführung A-A nicht senkrecht und geradlinig durchgehend, sondern stufenförmig versetzt (Variante a), geradlinig und unter einem Winkel von etwa 45° schräg geneigt gegenüber der Vertikalachse 21 (Variante c) oder gemäß einer Mischform mit einem abgeschrägten Absatz (Variante b). Als besonders bevorzugte Variante ist die Ausführung gemäß c) zu betrachten, die einen optimalen Magnetfluß gewährleistet.

Bezugszeichenliste
- 10: Antriebseinheit
- 12: Antriebsmotor
- 14: Feldmagnet
- 16: Spule
- 18: Anker
- 20: Mitnehmer
- 22: Lagerung
- 24: Längsachse
- 26: Ausklinkung
- 27: Mittelsteg
- 28: Kern
- 29: Vertikalachse
- 30,a,b: Bügel
- 32,a: Platte
- 34: Bolzen
- 36: Bolzen-Anordnung
- 38: Druckfeder
- 40: Einstellschraube
- 42: Klammer
- 44: Zapfen

- a: mittlerer Luftspaltabschnitt
- b: mittlerer Luftspaltabschnitt
- A: seitlicher Luftspaltabschnitt
- B: seitlicher Luftspaltabschnitt

## Patentansprüche

1. Antriebseinheit (10) für eine Haarschneidemaschine oder dergleichen, mit einem Antriebsmotor (12), der im wesentlichen aus einem Feldmagneten (14) mit einer Spule (16) und einem die Spule (16) durchsetzenden Kern (28) sowie aus einem Anker (18) besteht, wobei zwischen dem Feldmagneten (14) und dem Anker (18) seitliche Luftspaltabschnitte (A, B) und zwischen dem Kern (28) und dem Anker (18) mittlere Luftspaltabschnitte (a, b) gebildet sind,
**dadurch gekennzeichnet,**
**daß** die mittleren Luftspaltabschnitte (a, b) und die seitlichen Luftspaltabschnitte (A, B) in Bezug auf eine Längsachse (24) jeweils angenähert symmetrisch und schräg geneigt verlaufend ausgebildet sind.

2. Antriebseinheit (10) nach Anspruch 1,
**dadurch gekennzeichnet,**
**daß** die Luftspaltabschnitte (A, a, b, B) in Bezug auf die Längsachse (24) einen Winkel von etwa 45° einnehmen.

3. Antriebseinheit (10) nach Anspruch 1 oder 2,
**dadurch gekennzeichnet,**
**daß** der Anker (18) im Bereich der Längsachse (24) eine dreiecksförmige Ausklinkung (26) aufweist, in die ein entsprechend ausgebildeter Mittelsteg des Kerns (28) berührungslos hineinragt, wodurch die mittleren Luftspaltabschnitte (a, b) gebildet sind.

4. Antriebseinheit (10) nach Anspruch 1,
**dadurch gekennzeichnet,**
**daß** die mittleren Luftspaltabschnitte (a, b) und/oder die seitlichen Luftspaltabschnitte einen gekrümmten Konturverlauf aufweisen.

5. Antriebseinheit (10) nach einem der vorstehenden Ansprüche,
**dadurch gekennzeichnet,**
**daß** die mittleren Luftspaltabschnitte (a, b) und/oder die seitlichen Luftspaltabschnitte (A, B) im Längsschnitt eine schräg und/oder versetzt verlaufende Querschnittsform besitzen.

6. Antriebseinheit (10) nach Anspruch 5,
**dadurch gekennzeichnet,**
**daß** die Luftspaltabschnitte (A, a, b, B) in Bezug auf die Vertikalachse (29) einen Winkel etwa von 45° einnehmen.

7. Antriebseinheit (10) nach Anspruch 6,
**dadurch gekennzeichnet,**
**daß** der Anker (18) und ein Mitnehmer (20) über einen Bügel (30; 30a; 30b), eine Platte (32; 32a) oder eine Bolzen-Anordnung (36) verbunden sind.

8. Antriebseinheit (10) nach einem der Ansprüche 1 bis 7,
**dadurch gekennzeichnet,**
**daß** zwischen dem Anker (18) und dem Feldmagneten (14) mindestens eine Druckfeder (38) angeordnet ist.

9. Antriebseinheit (10) nach Anspruch 8,
**dadurch gekennzeichnet,**
**daß** der Federweg der Druckfeder (38) über eine Einstellschraube (40) oder über eine die Schenkel des Bügels (30b) verrastbar ergreifende Klammer (42) veränderbar ist.

10. Antriebseinheit (10) nach einem der Ansprüche 1 bis 9,
**dadurch gekennzeichnet,**
**daß** die Antriebseinheit (10) als ein Modul ausgebildet ist.

11. Antriebseinheit (10) nach einem der Ansprüche 1 bis 5,
**dadurch gekennzeichnet,**
**daß** der Feldmagnet (14) und der Anker (18) getrennte Module bilden.

12. Antriebseinheit (10) nach Anspruch 11,
**dadurch gekennzeichnet,**
**daß** der Anker (18) über eine Lagerung (22) mit einer Schwingfeder (44) verbunden ist.

## Claims

1. Drive unit (10) for hair clippers or similar, with a drive motor (12), which consists essentially of a field magnet (14) with a coil (16), and a core (28) passing through the coil (16), as well as an armature (18), wherein lateral air-gap segments (A, B) are formed between the field magnet (14) and the armature (18), and central air-gap segments (a, b) are formed between the core (28) and the armature (18), **characterised in that** the central air-gap segments (a, b) and the lateral air-gap segments (A, B) are in each case approximately symmetrical in relation to a longitudinal axis (24) and formed so as to extend obliquely.

2. Drive unit (10) according to Claim 1, **characterised in that** the air-gap segments (A, a, b, B) are at an angle of approximately 45° in relation to the longitudinal axis (24).

3. Drive unit (10) according to Claim 1 or 2, **characterised in that** the armature (18) has a triangular notch (26) in the region of the longitudinal axis (24), into which notch a correspondingly formed central rib of the core (28) projects in a non-contacting manner, thereby forming the central air-gap segments (a, b).

4. Drive unit (10) according to Claim 1, **characterised in that** the contour of the central air-gap segments (a, b) and/or the lateral air-gap segments extends in a curved manner.

5. Drive unit (10) according to any one of the preceding Claims, **characterised in that** the central air-gap segments (a, b) and/or the lateral air-gap segments (A, B) have a cross-sectional shape which extends obliquely and/or in a staggered manner in longitudinal section.

6. Drive unit (10) according to Claim 5, **characterised in that** the air-gap segments (A, a, b, B) are at an angle of approximately 45° in relation to the vertical axis (29).

7. Drive unit (10) according to Claim 6, **characterised in that** the armature (18) and a driver (20) are connected together via a yoke (30; 30a; 30b), a plate (32; 32a) or a bolt arrangement (36).

8. Drive unit (10) according to any one of Claims 1 to 7, **characterised in that** at least one compression spring (38) is disposed between the armature (18) and the field magnet (14).

9. Drive unit (10) according to Claim 8, **characterised in that** the spring travel of the compression spring (38) can be varied via an adjusting screw (40) or via a clip (42) which grips the legs of the yoke (30b) in a lockable manner.

10. Drive unit (10) according to any one of Claims 1 to 9, **characterised in that** the drive unit (10) is formed as a module.

11. Drive unit (10) according to any one of Claims 1 to 5, **characterised in that** the field magnet (14) and the armature (18) form separate modules.

12. Drive unit (10) according to Claim 11, **characterised in that** the armature (18) is connected to a vibratory spring (44) via a mounting arrangement (22).

## Revendications

1. Unité d'entraînement (10) pour une tondeuse à cheveux ou similaire, comprenant un moteur d'entraînement (12) composé essentiellement d'un inducteur (14) présentant une bobine (16) traversée par un noyau (28), et d'un induit (18), avec entre l'inducteur (14) et l'induit (18) des sections latérales de fente d'air (A, B) et entre le noyau (28) et l'induit (18) des sections centrales de fente d'air (a, b),
**caractérisée en ce que**
les sections centrales de fente d'air (a, b) et les sections latérales de fente d'air (A, B) sont respectivement, par rapport à un axe longitudinal (24) à peu près symétriques et inclinées.

2. Unité d'entraînement (10) selon la revendication 1,
**caractérisée en ce que**
les sections de fente d'air (A, a, b, B) sont inclinées chacune d'environ 45° sur l'axe longitudinal (24).

3. Unité d'entraînement (10) selon la revendication 1 ou 2,
**caractérisée en ce que**
l'induit (18), dans la zone de l'axe longitudinal (24), présente une encoche (26) de forme triangulaire dans laquelle pénètre sans contact une barrette médiane du noyau (28) présentant une forme correspondante, en formant ainsi les sections centrales de fente d'air (a, b).

4. Unité d'entraînement (10) selon la revendication 1,
**caractérisée en ce que**
le sections centrales de fente d'air (a, b) et/ou les sections latérales de fente d'air ont leurs contours courbes.

5. Unité d'entraînement (10) selon l'une des revendications précédentes,
**caractérisée en ce que**
les sections centrales de fente d'air (a, b) et/ou les sections latérales de fente d'air (A, B), en coupe longitudinale, présentent des sections de forme oblique et/ou avec décalage.

6. Unité d'entraînement (10) selon la revendication 5,
**caractérisée en ce que**
le sections de fente d'air (A, a, b, B) font avec l'axe vertical (29) un angle d'environ 45°.

7. Unité d'entraînement (10) selon la revendication 6,
**caractérisée en ce que**
l'induit (18) et un entraîneur (20) sont reliés par un étrier (30 ; 30a ; 30b), une plaque (32 ; 320) ou un système à verrou (36).

8. Unité d'entraînement (10) selon l'une quelconque des revendications 1 à 7,
**caractérisée en ce qu'**
entre l'induit (18) et l'inducteur (14) est monté au moins un ressort de pression (38).

9. Unité d'entraînement (10) selon la revendication 8,
**caractérisée en ce que**
la course élastique du ressort de pression (38) peut être modifiée au moyen d'une vis de réglage (40) ou par l'intermédiaire d'une pince (42) pouvant être bloquée en prise sur les branches de l'étrier (30b).

10. Unité d'entraînement selon l'une quelconque des revendications 1 à 9,
**caractérisée en ce que**
l'unité d'entraînement (10) est constituée sous forme de module.

11. Unité d'entraînement (10) selon l'une quelconque des revendications 1 à 5,
**caractérisée en ce que**
l'inducteur (14) et l'induit (18) constituent des modules séparés.

12. Unité d'entraînement (10) selon la revendication 11,
**caractérisée en ce que**
l'induit (18) est relié à un support (22) par un ressort oscillant (44).
